# EUROPÄISCHE PATENTSCHRIFT

(11) **EP 0 566 955 B1**
(45) Veröffentlichungstag und Bekanntmachung des Hinweises auf die Patenterteilung: **31.01.1996**
(21) Anmeldenummer: 93105956.2
(22) Anmeldetag: 13.04.1993
(51) Int. Cl.: C08C 19/14, C09J 115/02

(54) **Verfahren zur Herstellung von bromiertem chlorsubstituiertem Poly-1,3-butadien**
Process for the bromination of a chloro-substituted polybutadiene
Procédé de bromation d'un polybutadiène substitué par le chlore

(30) Priorität: 22.04.1992 DE 4213164
(43) Veröffentlichungstag der Anmeldung: 27.10.1993
(73) Patentinhaber: BAYER AG, D-51368 Leverkusen (DE)
(72) Erfinder: Laas, Hans Josef, Dr., W-5000 Köln 60 (DE); Lucas, Heinz Werner, Dr., W-5060 Bergisch Gladbach 2 (DE); Nachtkamp, Klaus, Dr., W-4000 Düseldorf 13 (DE); Königshofen, Heinrich, Dr., W-5060 Bergisch Gladbach 2 (DE)

(56) Entgegenhaltungen:
- DE-A- 2 616 994
- FR-A- 2 209 780
- US-A- 2 725 373

## Beschreibung

Die Erfindung betrifft ein Verfahren zur Herstellung von bromiertem chlorsubstituiertem Poly-1,3-butadien sowie dessen Verwendung bei der Herstellung von Klebstoffen und bei der Herstellung von Bindemitteln für die Verklebung von Gummi mit Metall.

Gummi-Metall-Verbundstoffe, wie sie heute in vielen Bereichen der Technik, beispielsweise für schwingungsdämpfende Bauteile, zum Einsatz kommen, werden im allgemeinen durch Aufvulkanisieren einer Kautschukmischung auf ein zuvor mit einem Haftmittel beschichtetes Metallteil hergestellt (Ullmann's Encyclopedia of Industrial Chemistry 5th Edition, 1985, Vol. A1 S. 255-6). Neben den üblichen Hilfsstoffen enthalten geeignete Haftmittel zur Verklebung von Gummi mit Metallen in der Hauptsache hochmolekulare metallbindende, im allgemeinen halogenierte Komponenten.

Eine vielfach verwendete metallbindende Komponente ist bromiertes Poly-2,3-dichlor-1,3-butadien (bromiertes PDCB), das entweder alleine oder im Gemisch mit weiteren, metallbindenden, vorzugsweise chlorierten Polymeren, beispielsweise mit nachchloriertem PVC (US-P 3 826 772), Chlorkautschuk oder chloriertem EPDM (EP-A 337 224), Synthese- oder Naturkautschuk (DE-OS 3 508 176) aber auch mit Phenol- und Epoxidharzen oder Polyisocyanaten (US-P 2 900 292) zum Einsatz kommen kann.

Die Herstellung von bromiertem PDCB ist Gegenstand der US-P 2 725 373. Danach erhält man durch Bromierung von PDCB in organischen, vorzugsweise chlorierten und gegenüber Brom inerten Lösemitteln, beispielsweise in Chloroform, Tetrachlormethan, Chlorbenzol oder auch Benzol, mit freiem Brom oder Bromierungsmitteln wie z.B. N-Bromsuccinimid (NBS) thermoplastische, gummiähnliche Produkte. Bei einem Bromgehalt von 16 bis 27 Gew.-% sind diese in gängigen Lösemitteln gut löslich und als Bindemittel für Elastomere geeignet. Die Bromierung findet praktisch ausschließlich durch Substitution in Allylstellung zur chlorierten Doppelbindung statt. Bei Verwendung von elementarem Brom als Bromierungsmittel entsteht dabei als Nebenprodukt Bromwasserstoff, der durch Zugabe eines säurebindenden Mittels, im allgemeinen einer anorganischen Base, unter entsprechendem Salzanfall entfernt werden muß.

Dieser Nachteil läßt sich nach der Lehre der DE-OS 2 616 994 dadurch beseitigen, daß die Bromierungsreaktion in einem Zweiphasen-Gemisch aus Wasser und einem der obengenannten organischen, vorzugsweise chlorierten Lösemittel durchgeführt wird. Der entstehende Bromwasserstoff, der sich in der wäßrigen Phase löst, kann mit Hilfe geeigneter Oxidationsmittel, beispielsweise mit Wasserstoffperoxid oder organischen Persäuren, oxidiert werden, worauf das auf diese Weise erneut gebildete Brom in die organische Phase übergeht und hier als Reagenz wieder zur Verfügung steht.

Beide Bromierungsverfahren sind auf die Verwendung organischer Lösemittel angewiesen, die unter Bromierungsbedingungen inert sind und als Quellmittel für PDCB bzw. bromiertes PDCB fungieren. Insbesondere die häufig eingesetzten, obengenannten chlorierten Lösemittel stehen jedoch teilweise in Verdacht krebserregend zu sein und sind in den letzten Jahren aufgrund ihres Ozonschichtschädigenden Potentials und ihrer schlechten Abbaubarkeit in der Umwelt in die öffentliche Kritik geraten. Ihre Handhabung ist nur noch unter Einhaltung strenger Sicherheitsrichtlinien gestattet.

Für die Verwendung von Tetrachlormethan, dem bevorzugten Lösemittel bei Bromierungsreaktionen, ist in naher Zukunft mit einem weltweiten Verbot zu rechnen.

Aufgabe der vorliegenden Erfindung war es daher, ein Verfahren zur Herstellung von bromiertem PDCB zur Verfügung zu stellen, bei dem auf die Mitverwendung ökologisch oder toxikologisch bedenklicher Lösemittel verzichtet werden kann.

Diese Aufgabe konnte nun mit der Bereitstellung des nachstehend näher beschriebenen Verfahrens gelöst werden. Das nachstehend näher beschriebene Verfahren basiert auf der überraschenden Beobachtung, daß sich sauer eingestellte, chlorsubstituierte Poly-1,3-butadien-latices in wäßriger Phase bromieren lassen, ohne daß eine Koagulation oder Fällung der dispersen Teilchen eintritt. Die Polymerdispersionen bleiben während der gesamten Reaktionszeit stabil. Die dadurch gewährleistete Feinteiligkeit macht die Verwendung eines organischen Quellmittels überflüssig.

Gegenstand der vorliegenden Erfindung ist ein Verfahren zur Herstellung von bromiertem chlorsubstituierten Poly-1,3-butadien, welches dadurch gekennzeichnet ist, daß man einen wäßrigen chlorsubstituierten Poly-1,3-butadienlatex bei einem pH-Wert kleiner 7 und einer Temperatur von 20 bis 95°C in wäßriger Phase mit einem Bromierungsmittel in Gegenwart eines radikalbildenden Katalysators und/oder unter Belichtung umsetzt, gewünschtenfalls das bromierte Reaktionsprodukt anschließend aus der erhaltenen wäßrigen Dispersion ausfällt und von der wäßrigen Flüssigkeit abtrennt.

Gegenstand der Erfindung ist auch das nach diesem Verfahren erhältliche bromierte chlorsubstituierte Poly-1,3-butadien.

Gegenstand der Erfindung ist schließlich auch die Verwendung des nach diesem Verfahren erhältlichen bromierten chlorsubstituierten Poly-1,3-butadiens als Ausgangskomponente bei der Herstellung von Klebstoffen.

Ausgangsmaterialien für das erfindungsgemäße Verfahren sind chlorsubstituierte Poly-1,3-butadienlatices, wie sie sich in an sich bekannter Weise durch Emulsionspolymerisation von Chloropren, 2,3-Dichlor-1,3-butadien oder Mischungen dieser Monomeren, gegebenenfalls in Anwesenheit von bis zu 20 Gew.-%, vorzugsweise bis zu 10 Gew.-%, bezogen auf die Gesamtmenge an eingesetzten Monomeren, an copolymerisierbaren Monomeren wie ein- und zweifach ethylenisch ungesättigten Verbindungen mit 3 bis 8 C-Atomen, beispielsweise monoethylenisch ungesättigten Aliphaten wie Acrylnitril, Methacrylnitril, α-Chloracrylnitril, Vinylidenchlorid, Acrylsäure-C₁-C₄-alkylester oder Methacrylsäure-C₁-C₄-alkylester, vinylsubstituierten aromatischen Verbindungen wie Styrol oder Vinyltoluolen, Dienen wie 1,3-Butadien, 1-Chlor-1,3-butadien oder 2-Chlor-3-methyl-1,3-butadien, Carbonsäuren wie Acrylsäure, Methacrylsäure, 2-Ethylacrylsäure, 2-Propylacrylsäure, 2-Butylacrylsäure oder Itaconsäure oder beliebigen Mischungen solcher Monomeren herstellen lassen.

Die Emulsionspolymerisation kann in saurem oder alkalischem wäßrigem Medium nach einem üblichen Verfahren, bevorzugt jedoch nach dem Zulaufverfahren durchgeführt werden, wobei man unter Zulaufverfahren ein Polymerisationsverfahren versteht, wonach ein kleiner Teil der Reaktionsmischung vorgelegt und nach dem Polymerisationsbeginn die restlichen Monomeren, gegebenenfalls mit weiterem Aktivator und Emulgator, kontinuierlich oder portionsweise zugegeben werden ("Ullmann's Encyclopädie der technischen Chemie", Band 9, S. 366 ff, Verlag Urban und Schwarzenberg, München-Berlin 1957; "Encyclopedia of Polymer Science and Technology", Vol. 3, S. 705 bis 730, John Wiley, New York 1965; "Methoden der organischen Chemie" (Houben-Weyl) XIV/1, 733 f, Georg Thieme Verlag, Stuttgart 1961).

Bevorzugt wird die Polymerisation bei einem pH-Wert von 1,5 bis 5, besonders bevorzugt von 2 bis 4, durchgeführt.

Der pH-Wert kann durch Mineralsäuren oder wasserlösliche organische, nicht polymerisierbare Säuren eingestellt werden. Zum Schutz vor unbeabsichtigten pH-Wert-Verschiebungen kann das System gepuffert werden.

Zum Start und zur Aufrechterhaltung der Polymerisation werden Aktivatoren bzw. Aktivatorsysteme eingesetzt. Bevorzugte Aktivatoren bzw. Aktivatorsysteme sind Wasserstoffperoxid, wasserlösliche Salze der Peroxodischwefelsäure wie Kaliumperoxodisulfat, organische Peroxide oder besonders bevorzugt Redoxsysteme, d.h. Kombinationen anorganischer oder organischer Peroxoverbindungen mit geeigneten Reduktionsmitteln, beispielsweise die Kombinationen Kaliumperoxodisulfat/Natriumdithionit, Ammoniumpersulfat/Natriumhydroxymethylsulfinat, Diisopropylhydroperoxid/Schwefelwasserstoff oder Peroxid/Triethanolamin. Diese Aktivatoren bzw. die Aktivatorsysteme werden im allgemeinen in Mengen von 0,1 bis 5, vorzugsweise 0,2 bis 4 mmol pro 100 g eingesetztes polymerisierbares Monomer verwendet.

Geeignete Emulgatoren zur Herstellung der als Ausgangskomponenten beim erfindungsgemäßen Verfahren eingesetzten chlorsubstituierten Poly-1,3-butadienlatices sind grundsätzlich anionische, kationische, amphotere oder nichtionogene Emulgatoren, wie sie beispielsweise in "Methoden der organischen Chemie" (Houben-Weyl) Band XIV/1, 190 f Georg Thieme Verlag, Stuttgart 1961 beschrieben sind, oder beliebige Gemische solcher Emulgatoren.

Geeignete anionische Emulgatoren sind beispielsweise Alkylarylsulfonate mit 8 bis 18 C-Atomen im Alkylrest, C₈-C₁₈-Alkylsulfate und -sulfonate, sulfonierte Bernsteinsäureester, sulfonierte, sulfatierte oder phosphatierte Additionsprodukte von Alkylenoxid (insbesondere Ethylen- und gegebenenfalls Propylenoxid) an C₈-C₁₂-Alkylphenole und wasserlösliche Naphthalinsulfonsäure/Formaldehyd-Kondensate.

Diese Emulgatoren tragen als Kationen im allgemeinen Natrium, Kalium oder Ammoniumionen.

Weitere geeignete anionische Emulgatoren sind die Salze der aus Tallöl, Kiefernbalsam und Wurzelharz gewonnenen Diterpencarbonsäuren und insbesondere deren Disproportionierungs-, Teilhydrierungs- und Polymerisationsprodukte (W. Barendrecht, L.T. Lees in Ullmanns Encyclopädie der technischen Chemie, 4. Aufl., Bd. 12, Verlag Chemie, Weinheim-New York 1976, S. 528-538).

Als geeignete kationische Emulgatoren seien beispielhaft genannt: Aminsalze, quartäre Ammonium- und Pyridinumsalze, beispielsweise von Dodecylamin, von Veresterungsprodukten aus Paraffinfettsäure und Dimethylaminoethanol, von Kondensationsprodukten aus Ölsäure und N,N-Diethyl-ethylendiamin, von Umsetzungsprodukten primärer Amine mit Bis-(2-chlorethyl)-ether oder 2-Chlor-2'-hydroxydiethylether, Cetylpyridiniumchlorid, Laurylpyridiniumsulfat oder Salze hydrierter oder dehydrierter Abietylamine.

Als nichtionogene Emulgatoren sind Polyadditionsverbindungen auf Basis Ethylenoxid und/oder Propylenoxid geeignet.

Bevorzugt kommen bei der Herstellung der als Ausgangsmaterialien beim erfindungsgemäßen Verfahren eingesetzten Poly-1,3-butadienlatices anionische Emulgatoren zum Einsatz. Besonders bevorzugt sind sulfonierte, sulfatierte oder phosphatierte Additionsprodukte von Alkylenoxiden an C₈-C₁₂-Alkylphenole und wasserlösliche Naphthalinsulfonsäure/Formaldehyd-Kondensate.

Die Emulgatoren werden im allgemeinen in Mengen von 0,1 bis 5,0, vorzugsweise 1,0 bis 3,0 Gew.-%, bezogen auf die Mischung der zu polymerisierenden Monomeren, eingesetzt.

Die Herstellung der als Ausgangsmaterialien beim erfindungsgemäßen Verfahren eingesetzten Poly-1,3-butadienlatices kann gegebenenfalls in Gegenwart von sogenannten Molekulargewichtsreglern (kurz: "Regler") erfolgen (vgl. "Methoden der organischen Chemie" (Houben-Weyl), 4. Aufl., Bd. 14/1, Georg Thieme Verlag, Stuttgart 1961, S. 197 f, insbesondere S. 318 f.).

Geeignete Regler sind beispielsweise C₈-C₁₈-Alkylmercaptane wie z.B. Octylmercaptan, lineares oder verzweigtes Dodecylmercaptan, Tridecylmercaptan oder deren Gemische, Di-C₄-C₂₀-alkylxanthogendisulfide mit linearen, verzweigten oder cyclischen Alkylresten wie z.B. Ethylxanthogendisulfid, Isopropylxanthogendisulfid oder Bis-(methylentrimethylolpropan)-xanthogendisulfid, Polysulfide oder Haloforme wie Jodoform. Mit Hilfe der Regler lassen sich Molekulargewicht und Gelgehalt der Latices beeinflussen, wobei unter Gelgehalt der prozentuale Anteil eines Latex verstanden wird, der in Tetrahydrofuran bei 25°C unlöslich ist (250 mg Probe in 25 ml THF 24 Stunden stehen lassen, zentrifugieren, trocknen bei 70°C bis zur Gewichtskonstanz).

Die Regler werden gegebenenfalls in Mengen von 0,1 bis 10, vorzugsweise 0,3 bis 6 Gew.-%, bezogen auf die Menge der zu polymerisierenden Monomere, eingesetzt.

Bevorzugte Ausgangsmaterialien für das erfindungsgemäße Verfahren sind Poly-2,3-dichlor-1,3-butadienlatices, wie sie sich durch Emulsionspolymerisation von 2,3-Dichlor-1,3-butadien als Monomer, dem Ammoniumsalz eines sulfatierten ethoxylierten Nonylphenols und dem Natriumsalz des Formaldehydkondensationsprodukts der β-Naphthalinsulfonsäure als Emulgator, n-Dodecylmercaptan als Regler und Kaliumperoxodisulfat, Natriumdithionit und Natrium-β-anthrachinonsulfonat als Aktivator nach dem Zulaufverfahren herstellen lassen, wobei im allgemeinen eine Menge von weniger als 30 Gew.-%, vorzugsweise weniger als 10 Gew.-%, des Monomeren mit weniger als 30 Gew.-%, vorzugsweise weniger als 20 Gew.-% des Emulgators in mehr als 50 Gew.-% der Wassermenge vorgelegt und anschließend bei einem pH-Wert von kleiner 7, vorzugsweise von 2 bis 4, und einer Temperatur von 10 bis 40°C durch Zugabe von Regler, Emulgatorlösung, Monomer und Aktivator bis zu einem Umsatzgrad von mehr als 70 %, vorzugsweise mehr als 95 % umgesetzt wird.

Besonders bevorzugte Poly-2,3-dichlor-1,3-butadienlatices weisen einen Gelgehalt von weniger als 5 Gew.-% auf.

Als Bromierungsmittel dient beim erfindungsgemäßen Verfahren im allgmeinen elementares Brom, das in Mengen von 5 bis 150 Gew.-%, vorzugsweise 12 bis 85 Gew.-%, bezogen auf den Festkörper des verwendeten Ausgangslatex zum Einsatz kommt.

Als Bromierungsmittel ebenfalls geeignet, wenngleich weniger bevorzugt, sind Reagenzien, die in situ Brom freisetzen können, beispielsweise Mischungen von Alkalibromiden und -bromaten, die bei saurem pH unter Bildung von Brom reagieren, oder auch wasserlösliche bzw. -mischbare Ammoniumperbromide.

Das erfindungsgemäße Verfahren wird zur Beschleunigung der Reaktion in Gegenwart radikalbildender Katalysatoren und/oder unter Belichtung durchgeführt.

Als Katalysatoren geeignet sind insbesondere wasserlösliche oder gegebenenfalls in einem PDCB-Latex co-emulgierbare anorganische bzw. organische Peroxo- oder Azoverbindungen, die thermolytisch oder photolytisch Radikale freisetzen und so die Bromierung initiieren können. Beispielhaft seien hier genannt: Wasserstoffperoxid, organische Hydroperoxide, wie z.B. tert.-Butylhydroperoxid oder Cumolhydroperoxid, Peroxide, wie z.B. Di-tert.-butylperoxid, Di-cumylperoxid oder Butanonperoxid, Diacylperoxide, wie z.B. Diacetylperoxid, Dilauroylperoxid oder Benzoylperoxid, Peroxicarbonsäuren und deren Ester, wie z.B. Perbenzoesäure, m-Chlorperbenzoesäure oder Perbenzoesäure-tert.-butylester, aliphatische Azoverbindungen, wie z.B. Azo-bis-isobutyronitril oder Azo-bis-cyclohexannitril.

Das Reaktionsgemisch kann entweder von außen oder mit Hilfe einer Tauchlampe belichtet werden. Grundsätzlich geeignet ist dazu Licht einer Wellenlänge kleiner 620 nm.

Bevorzugt wird das erfindungsgemäße Verfahren in Gegenwart radikalbildender Katalysatoren durchgeführt.

Besonders bevorzugt ist die Verwendung von Wasserstoffperoxid oder wasserlöslichen organischen Hydroperoxiden.

Die für das erfindungsgemäße Verfahren geeigneten Katalysatoren kommen im allgemeinen in einer Menge von 1 bis 50, vorzugsweise 5 bis 40 Mol-%, bezogen auf die Menge an verwendetem Brom, zum Einsatz.

Zur Durchführung des erfindungsgemäßen Verfahrens wird der als Ausgangsmaterial verwendete chlorsubstituierte Poly-1,3-butadienlatex gegebenenfalls mit verdünnter Salzsäure auf einen pH-Wert von kleiner 7, vorzugsweise von 0 bis 4, eingestellt und bei einer Temperatur von 20 bis 95°C, vorzugsweise 40 bis 80°C, unter Rühren mit elementarem Brom und einem radikalbildenden Katalysator und gegebenenfalls unter gleichzeitiger Belichtung umgesetzt, bis das Verschwinden der für Brom typischen Braunfärbung die Vollständigkeit der Umsetzung anzeigt.

Aus der erhaltenen Dispersion kann das bromierte Reaktionsprodukt durch geeignete Methoden, beispielsweise durch Aussalzen oder durch Zugabe eines Alkohols gefällt, anschließend von der wäßrigen Flüssigkeit abgetrennt und getrocknet werden.

Nach einer anderen, wenn auch weniger bevorzugten Ausführungsform des erfindungsgemäßen Verfahrens erfolgt die Umsetzung mit Brom ohne die Mitverwendung eines Katalysators unter alleiniger Belichtung des Reaktionsansatzes.

Selbstverständlich kann auch beim erfindungsgemäßen Verfahren, wie in der DE-OS 2 616 994 für Zweiphasengemische beschrieben, der im Laufe der Bromierung entstehende Bromwasserstoff mit Hilfe geeigneter Oxidationsmittel, beispielsweise mit Wasserstoffperoxid, wieder zu Brom aufoxidiert und so in die Reaktion zurückgeführt werden, wodurch eine nahezu quantitative Nutzung des Broms ermöglicht wird.

Bei den erfindungsgemäßen Verfahrensprodukten handelt es sich um beige bis braune Feststoffe mit Bromgehalten von 3 bis 42 Gew.-%, vorzugsweise 10 bis 30 Gew.-%. Sie stellen wertvolle Ausgangskomponenten bei der Herstellung von Klebstoffen dar und können sowohl in Form der beim erfindungsgemäßen Verfahren primär anfallenden wäßrigen Dispersionen als auch aus organischer Lösung appliziert werden. Die aus den bevorzugt beim erfindungsgemäßen Verfahren als Ausgangsverbindung eingesetzten Poly-2,3-dichlor-1,3-butadienlatices erhältlichen erfindungsgemäßen Verfahrensprodukte sind insbesondere für die Herstellung von Bindemittel zur Gummi-Metall-Verklebung hervorragend geeignet.

Die folgenden Beispiele dienen zur weiteren Erläuterung der Erfindung. Alle Prozentangaben beziehen sich, soweit nicht anderslautendes vermerkt, auf Gewichtsprozente.

### Beispiel 1 (Herstellung eines PDCB-Latex)

In einem Reaktor werden 162 g Wasser, 3,75 g 10 %ige wäßrige Schwefelsäure und 4,5 g 2,3-Dichlorbutadien vorgelegt. Es wird eine Emulgatorlösung aus 135 g Wasser, 9,75 g einer 30 %igen wäßrigen Lösung eines Ammoniumsalzes eines sulfatierten ethoxylierten Nonylphenols mit durchschnittlich 4 Ethoxy-Gruppen/Molekül, 0,5 g des Natriumsalzes des Formaldehydkondensationsproduktes der β-Naphthalinsulfonsäure und 0,025 g Natrium-β-anthrachinonsulfat hergestellt.

Nachdem 14,5 g dieser Emulgatorlösung zum Reaktorinhalt gegeben worden sind, werden 8 g n-Dodecylmercaptan zu der restlichen Emulgatorlösung gegeben (Zulauf 1). Es wird eine Lösung aus 0,9 g Natriumdithionit in 12,5 g Wasser hergestellt und mit 5 %iger KOH auf pH 10,5 eingestellt (Zulauf 3).

Es wird eine Lösung aus 0,4 g Kaliumperoxodisulfat in 12,5 Teilen Wasser hergestellt (Zulauf 4). Der Reaktor wird auf 25°C eingestellt und 30 Minuten Stickstoff durchgeleitet. Zum Start der Reaktion werden 1 g von Zulauf 3 und 0,6 g von Zulauf 4 zugegeben. Anschließend werden die Zuläufe gestartet:

| | |
|---|---|
| Zulauf 1 | 34,6 g/Std. |
| 2,3-Dichlorbutadien | 31,8 g/Std. |
| Zulauf 3 | 3,5 g/Std. |
| Zulauf 4 | 3,5 g/Std. |

Nach Beendigung aller Zuläufe (240 Minuten) wird eine Lösung von 0,15 g Natriumdithionit in 3 g Wasser zugesetzt.

Der Latex wird filtriert, mit 10 %iger KOH auf pH 7 eingestellt und überschüssiges Monomer durch Wasserdampfdestillation abgetrennt.

Der Feststoffgehalt nach der Polymerisation liegt bei 25 %, der Umsatz >99 %.

### Beispiel 2

150 g des in Beispiel 1 beschriebenen PDCB-Latex werden mit 1,9 g eines auf Oleylalkohol gestarteten Polyethylenoxidpolyethers als Emulgator versetzt, mit 200 ml 1N-Salzsäure auf einen pH-Wert von ca. 1 eingestellt und auf 70°C erwärmt. Anschließend tropft man unter Rühren 20 g elementares Brom und parallel dazu 15 g einer 28 %igen wäßrigen Lösung von tert.-Butylhydroperoxid innerhalb von 30 min zu und rührt noch 5 h bei 70°C nach. Nach Abkühlen auf Raumtemperatur wird das Produkt durch Zugabe von 400 ml Methanol gefällt, abgesaugt, mit Methanol nachgewaschen und bei 50°C im Trockenschrank getrocknet.

Man erhält ein in Toluol vollständig lösliches, beigebraunes Pulver folgender Zusammensetzung:

| | |
|---|---|
| C: | 31,8 % |
| H: | 2,6 % |
| O: | 0,2 % |
| Br: | 19,4 % |
| Cl: | 45,6 % |

### Beispiel 3

150 g des in Beispiel 1 beschriebenen PDCB-Latex werden mit 1,9 g eines auf Oleylalkohol gestarteten Polyethylenoxidpolyethers als Emulgator versetzt, mit 200 ml 1 N-Salzsäure auf einen pH-Wert von ca. 1 eingestellt und auf 70°C erwärmt. Anschließend tropft man unter Rühren 15 g elementares Brom und parallel dazu 15 g einer 28 %igen wäßrigen Lösung von tert.-Butylhydroperoxid innerhalb von 30 min zu und rührt für 2,5 h bei 70°C.

Nach Zugabe von 21,0 g einer 10 %igen Wasserstoffperoxidlösung rührt man weitere 4 h bei 70°C, läßt auf Raumtemperatur abkühlen und fällt das Produkt mit 400 ml Methanol aus. Nach Absaugen, Nachwaschen mit Methanol und Trocknen bei 50°C erhält man ein gelbbraunes Pulver folgender Zusammensetzung:

| | |
|---|---|
| C: | 31,8 % |
| H: | 2,8 % |
| O: | 1,2 % |
| Br: | 20,1 % |
| Cl: | 43,8 % |

Das Produkt ist in gängigen Lösemitteln wie Toluol oder Xylol vollständig löslich und filmbildend.

## Patentansprüche

1. Verfahren zur Herstellung von bromiertem chlorsubstituiertem Poly-1,3-butadien, dadurch gekennzeichnet, daß man einen wäßrigen chlorsubstituierten Poly-1,3-butadienlatex bei einem pH-Wert kleiner 7 und einer Temperatur von 20 bis 95°C in wäßriger Phase mit einem Bromierungsmittel in Gegenwart eines radikalbildenden Katalysators und/oder unter Belichtung umsetzt, gewünschtenfalls das bromierte Reaktionsprodukt anschließend aus der erhaltenen wäßrigen Dispersion ausfällt und von der wäßrigen Flüssigkeit abtrennt.

2. Verfahren gemäß Anspruch 1, dadurch gekennzeichnet, daß man als wäßrigen chlorsubstituierten Poly-1,3-butadienlatex einen wäßrigen Poly-2,3-dichlor-1,3-butadienlatex einsetzt.

3. Verfahren gemäß Ansprüchen 1 und 2, dadurch gekennzeichnet, daß man als Bromierungsmittel elementares Brom einsetzt.

4. Verfahren gemäß Ansprüchen 1 bis 3, dadurch gekennzeichnet, daß man als radikalbildenden Katalysator ein wasserlösliches organisches oder anorganisches Peroxid oder Hydroperoxid einsetzt.

5. Verfahren gemäß Ansprüchen 1 bis 3, dadurch gekennzeichnet, daß man als radikalbildenden Katalysator Wasserstoffperoxid oder tert.-Butylhydroperoxid einsetzt.

6. Verfahren gemäß Ansprüchen 1 bis 5, dadurch gekennzeichnet, daß man die Umsetzung bei einer Temperatur von 40 bis 80°C durchführt.

## Claims

1. A process for the production of brominated chlorine-substituted poly-1,3-butadiene, characterized in that an aqueous chlorine-substituted poly-1,3-butadiene latex is reacted in aqueous phase with a brominating agent in the presence of a radical-forming catalyst and/or in the presence of light at a pH value below 7 and at a temperature of 20 to 95°C, the brominated reaction product is optionally precipitated from the aqueous dispersion obtained and then separated from the aqueous liquid.

2. A process as claimed in claim 1, characterized in that an aqueous poly-2,3-dichloro-1,3-butadiene latex is used as the aqueous chlorine-substituted poly-1,3-butadiene latex.

3. A process as claimed in claims 1 and 2, characterized in that elemental bromine is used as the brominating agent.

4. A process as claimed in claims 1 to 3, characterized in that a water-soluble, organic or inorganic peroxide or hydroperoxide is used as the radical-forming catalyst.

5. A process as claimed in claims 1 to 3, characterized in that hydrogen peroxide or tert. butyl hydroperoxide is used as the radical-forming catalyst.

6. A process as claimed in claims 1 to 5, characterized in that the reaction is carried out at a temperature of 40 to 80°C.

## Revendications

1. Procédé pour la préparation d'un poly(chloro-1,3-butadiène) bromé, caractérisé en ce que l'on fait réagir un latex aqueux de poly(chloro-1,3-butadiène) à un pH inférieur à 7 et à une température de 20 à 95°C en phase aqueuse avec un agent bromant en présence d'un catalyseur formant des radicaux libres et/ou sous exposition à la lumière, on précipite ensuite si on le désire le produit de réaction bromé de la dispersion aqueuse obtenue et on le sépare du liquide aqueux.

2. Procédé selon la revendication 1, caractérisé en ce que l'on utilise en tant que latex aqueux de poly(chloro-1,3-butadiène) un latex aqueux de poly(2,3-dichloro-1,3-butadiène).

3. Procédé selon les revendications 1 et 2, caractérisé en ce que l'agent bromant utilisé est le brome élémentaire.

4. Procédé selon les revendications 1 à 3, caractérisé en ce que l'on utilise en tant que catalyseur formant des radicaux libres un peroxyde ou hydroperoxyde organique ou minéral soluble dans l'eau.

5. Procédé selon les revendications 1 à 3, caractérisé en ce que l'on utilise en tant que catalyseur formant des radicaux libres le peroxyde d'hydrogène ou l'hydroperoxyde de tertbutyle.

6. Procédé selon les revendications 1 à 5, caractérisé en ce que l'on exécute la réaction à une température de 40 à 80°C.
